# FASCICULE DE BREVET EUROPEEN

(11) **EP 1 046 547 B1**
(45) Date de publication et mention de la délivrance du brevet: **09.02.2005**
(21) Numéro de dépôt: 00400867.8
(22) Date de dépôt: 29.03.2000
(51) Int. Cl.: B60R 21/02, F15B 15/19, F15B 15/22

(54) **Système de protection des membres inférieurs d'un occupant d'un véhicule automobile**
System zum Schützen der unteren Gliedmassen eines Kraftfahrzeug-Insassens
System for protecting the lower limbs of a motor vehicle occupant

(30) Priorité: 20.04.1999 FR 9904972
(43) Date de publication de la demande: 25.10.2000
(73) Titulaire: SNPE Matériaux Energétiques, 75004 Paris (FR)
(72) Inventeur: Gautier, Philippe, 91220 Le Plessis Pate (FR); Maudet, Natacha, 92300 Levallois Perret (FR); Delarue, Jean-Jacques, 78140 Vélizy (FR); Obry, Cédric, 95430 Auvers sur Oise (FR)

(56) Documents cités:
- EP-A- 0 186 880
- DE-A- 2 258 063
- US-A- 3 389 873
- US-A- 3 871 470
- US-A- 3 901 531
- US-A- 4 198 075
- US-A- 4 423 846
- US-A- 4 458 921

## Description

La présente invention se rapporte au domaine de la sécurité automobile et concerne plus particulièrement un système de protection contenant notamment un générateur de gaz destiné à déployer une plaque servant à bloquer les membres inférieurs d'un occupant d'un véhicule automobile.

Afin de limiter au maximum le risque d'accidents corporels couru par les occupants d'un véhicule automobile lors d'un choc frontal ou latéral, il a été proposé depuis une trentaine d'années d'incorporer des systèmes générateurs de gaz dans les véhicules permettant de gonfler des coussins de protection aptes à protéger la tête et le thorax des occupants.

Depuis peu, de nombreuses demandes de brevet sont apparues concernant des systèmes de protection inclus dans la partie basse du tableau de bord et conçus pour bloquer les membres inférieurs de l'occupant lors d'une collision de manière à ce que, d'une part, lesdits membres inférieurs soient protégés, et d'autre part, l'occupant ne puisse pas glisser le long du siège sur lequel il est assis et être blessé par la ceinture de sécurité ou encore, le cas échéant, par un coussin de protection.

Ces différents systèmes de protection peuvent être schématiquement classés en trois catégories. La première catégorie comprend les systèmes de protection qui renferment un générateur de gaz destiné à gonfler un coussin de protection prévu pour venir directement au contact des membres inférieurs de l'occupant. Mais, ces systèmes étant logés dans la partie basse du tableau de bord et donc au voisinage du bloc moteur du véhicule, le coussin de protection est alors susceptible d'être endommagé par des éléments métalliques ou plastiques situés à proximité et déformés sous l'effet d'une collision. De tels systèmes sont par exemple décrits dans la demande de brevet DE 39 34588 et dans le brevet US 5,458,366.

La deuxième catégorie comprend les systèmes de protection qui renferment un générateur de gaz destiné à gonfler un coussin de protection permettant lui-même d'actionner une plaque prévue pour venir au contact des membres inférieurs de l'occupant. Mais ces systèmes, qui sont par exemple décrits dans les demandes de brevet EP 0 684 164 et EP 0 820 905, présentent généralement des coûts de fabrication et des encombrements trop élevés.

La troisième catégorie contient les systèmes de protection qui ne font intervenir aucun coussin de protection. Les brevets US 5,409,260 et US 4,951,963 par exemple divulguent des systèmes de protection incluant une plaque apte à être déplacée en cas de choc de manière à aller à la rencontre des membres inférieurs de l'occupant, cette plaque pouvant être actionnée par voie pneumatique ou par voie mécanique. Mais, le déploiement maximal de la plaque, pour être efficace, devant être réalisé dans la dizaine de millisecondes suivant la collision, il en découle que la mise en vitesse de ladite plaque dans le sens opposé à celle des membres inférieurs durant ce laps de temps est réalisée de façon brutale et la plaque est alors susceptible de blesser les membres inférieurs de l'occupant lors de l'impact.

L'homme du métier est donc toujours à la recherche d'un système de protection des membres inférieurs d'un occupant permettant de pallier les différents problèmes précédemment évoqués.

L'invention a pour but de répondre à cette attente et concerne donc un système de protection des membres inférieurs d'un occupant d'un véhicule automobile comprenant un générateur de gaz apte à provoquer le déplacement et donc le déploiement d'une plaque de protection, ledit moyen de coulissement présentant une première extrémité logée dans le générateur et une seconde extrémité située à l'extérieur dudit générateur et à laquelle est rattachée une plaque de protection (voir US-A-4 951 963), caractérisé en ce que,
i) le générateur de gaz contient un chargement pyrotechnique auquel est associé un dispositif d'allumage,
ii) un dispositif de freinage est apte, au cours du déplacement du moyen de coulissement, à provoquer la diminution progressive de la vitesse de déplacement dudit moyen de coulissement,
iii) le générateur de gaz contient un moyen de blocage et d'amortissement destiné à bloquer le moyen de coulissement à la fin de son déplacement, la plaque étant à ce moment là totalement déployée, et à absorber l'énergie induite par l'impact des membres inférieurs de l'occupant sur la plaque de protection.

Ainsi, ce système de protection, qui est apte à assurer le déploiement total du moyen de coulissement et donc de la plaque de protection dans une période de temps de l'ordre de 10 millisecondes, permet de réduire grandement le risque de blessure des membres inférieurs de l'occupant lors de l'impact car,
- d'une part, l'utilisation d'un chargement pyrotechnique destiné à propulser le moyen de coulissement à grande vitesse dans les tout premiers instants de fonctionnement permet l'incorporation d'un dispositif de freinage qui assure par la suite la diminution progressive de la vitesse de déplacement dudit moyen de coulissement. Ainsi, même si les membres inférieurs de l'occupant sont amenés à percuter la plaque de protection avant que celle-ci ne soit totalement déployée et verrouillée, le risque de blessure est réduit car ladite plaque est animée à ce moment là d'une vitesse relativement faible,
- d'autre part, lorsque la plaque de protection est totalement déployée, le moyen de blocage et d'amortissement permet d'amortir le choc entre les membres inférieurs et la plaque de protection.

Préférentiellement, le générateur de gaz est constitué à partir d'un corps cylindrique présentant une extrémité amont dans laquelle sont insérés le chargement pyrotechnique ainsi que le dispositif d'allumage, une paroi latérale et une extrémité aval portant une perforation centrale, ledit générateur de gaz contenant une pièce cylindrique creuse qui constitue un chemisage le long duquel peut glisser le moyen de coulissement sous l'action des gaz provenant de la combustion du chargement pyrotechnique.

Préférentiellement encore, la pièce comporte une paroi latérale au contact de la paroi latérale du corps et présentant, d'une part, une première extrémité calée contre l'extrémité amont, et d'autre part, une seconde extrémité calée contre l'extrémité aval. Chacune de ces deux extrémités pourra être directement en appui contre l'extrémité du corps qui lui correspond ou pourra être en appui contre une butée intercalée entre l'extrémité de la pièce et l'extrémité du corps.

Avantageusement, le moyen de coulissement est constitué par :
i) un capuchon cylindrique comportant une paroi latérale se terminant par une extrémité ouverte et par un fond plat, ladite paroi latérale étant au contact de la surface interne de la paroi latérale de la pièce et ledit fond plat permettant de diviser l'intérieur de la pièce en une chambre propulsive et en une chambre de coulissement,
ii) une tige présentant une première extrémité fixée sur le fond plat et une seconde extrémité traversant la perforation centrale portée par l'extrémité aval du corps.

Selon une première variante préférée de réalisation de l'invention, le dispositif de freinage est pneumatique. Préférentiellement, la pièce présente une paroi frontale étanche intercalée entre la première extrémité de ladite pièce et l'extrémité ouverte du capuchon, le fond plat est muni d'orifices uniformément répartis autour de la zone de fixation entre ledit capuchon et la tige et la pièce comporte des zones ajourées destinées à conduire directement les gaz provenant de la combustion du chargement pyrotechnique dans la chambre de coulissement. De façon avantageuse, la première extrémité ainsi que la seconde extrémité de la pièce sont crénelées et des rainures longitudinales sont creusées dans la surface externe de la paroi latérale de la pièce. Avantageusement encore, des perforations longitudinales réalisées dans la pièce à proximité de la surface interne de la paroi latérale délimitent des languettes longitudinales fragilisées constituant le moyen de blocage et d'amortissement du moyen de coulissement.

Selon une seconde variante préférée de réalisation de l'invention, le dispositif de freinage est mécanique. Préférentiellement, la surface interne de la paroi latérale de la pièce présente un épaulement externe destiné à bloquer le moyen de coulissement à la fin de son déplacement, l'épaisseur de la paroi latérale étant croissante entre la première extrémité de ladite paroi latérale et l'épaulement externe puis étant préférentiellement constante entre ledit épaulement externe et la seconde extrémité de la paroi latérale.

Selon l'une quelconque des deux variantes préférées de réalisation de l'invention, la pièce est en matière plastique et le chargement pyrotechnique génère une quantité de gaz de combustion décroissante par unité de temps, ce qui permet de participer à l'obtention d'une diminution progressive de la vitesse de déplacement du moyen de coulissement au cours de son déplacement.

Un système de protection selon l'invention, outre le fait qu'il permet de réduire fortement le risque de blessure lors de l'impact, présente l'avantage de ne comporter qu'un faible nombre de pièces mécaniques faciles à assembler, ce qui confère donc à ce système de faibles coûts de fabrication et un faible encombrement.

L'invention concerne également un générateur de gaz utilisé en sécurité automobile et apte à provoquer le déplacement d'un moyen de coulissement qui présente une première extrémité logée dans le générateur et une seconde extrémité située à l'extérieur dudit générateur, caractérisé en ce que,
i) le générateur de gaz contient un chargement pyrotechnique auquel est associé un dispositif d'allumage,
ii) un dispositif de freinage est apte, au cours du déplacement du moyen de coulissement, à provoquer la diminution progressive de la vitesse de déplacement dudit moyen de coulissement,
iii) le générateur de gaz contient un moyen de blocage et d'amortissement destiné à bloquer le moyen de coulissement à la fin de son déplacement puis à absorber l'énergie induite par le déplacement du moyen de coulissement dans le sens opposé.

On décrit ci-après aux figures 1 à 8 deux variantes préférées de réalisation de l'invention.

La figure **1** est une vue en perspective arrachée d'un générateur de gaz selon la première variante préférée de réalisation de l'invention.

La figure **2** est une première vue en coupe longitudinale du générateur représenté à la figure 1.

La figure **3** est une vue en coupe selon le plan III-III du générateur représenté à la figure 2, un agrandissement d'une zone portant une perforation longitudinale étant également représenté.

La figure **4** est une seconde vue en coupe longitudinale, selon le plan IV-IV, du générateur représenté aux figures 2 et 3.

La figure **5** est une vue en coupe selon le plan IV-IV du générateur représenté aux figures 2 à 4 après déploiement maximal du moyen de coulissement.

La figure **6** est une vue en perspective arrachée d'un générateur de gaz selon la seconde variante préférée de réalisation de l'invention.

La figure **7** est une vue en coupe longitudinale du générateur représenté à la figure 6.

La figure **8** est une vue en coupe longitudinale du générateur représenté aux figures 6 et 7 après déploiement maximal du moyen de coulissement.

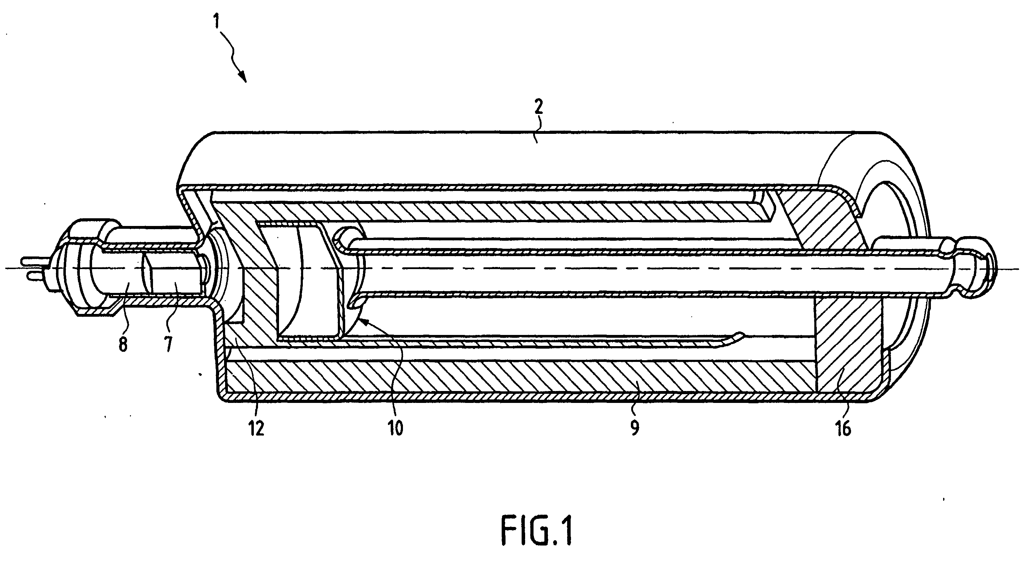

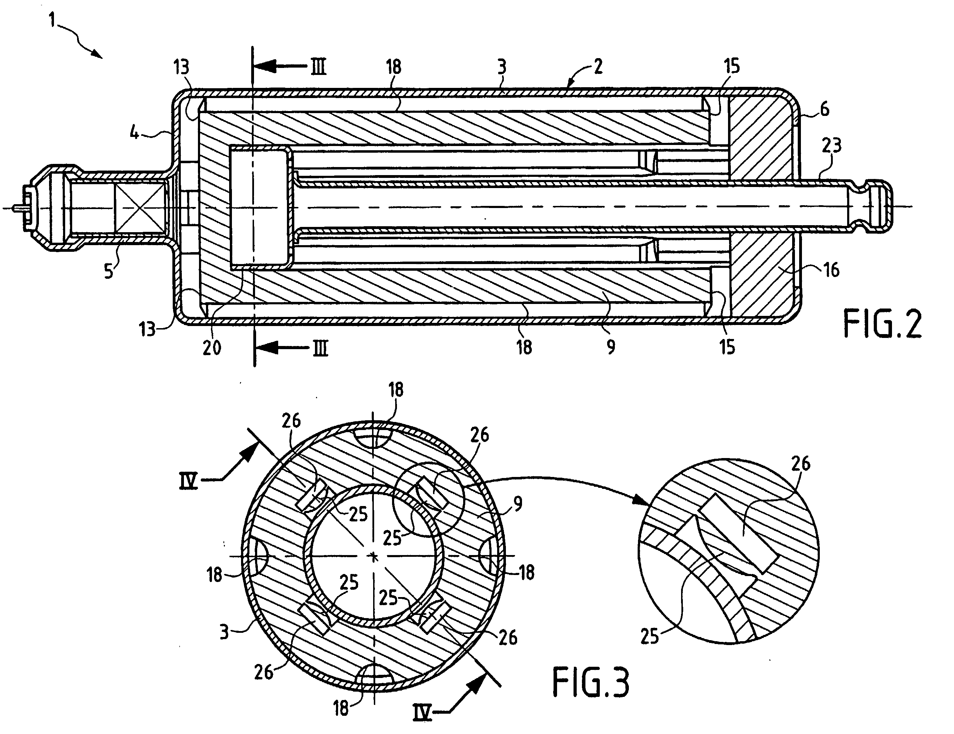

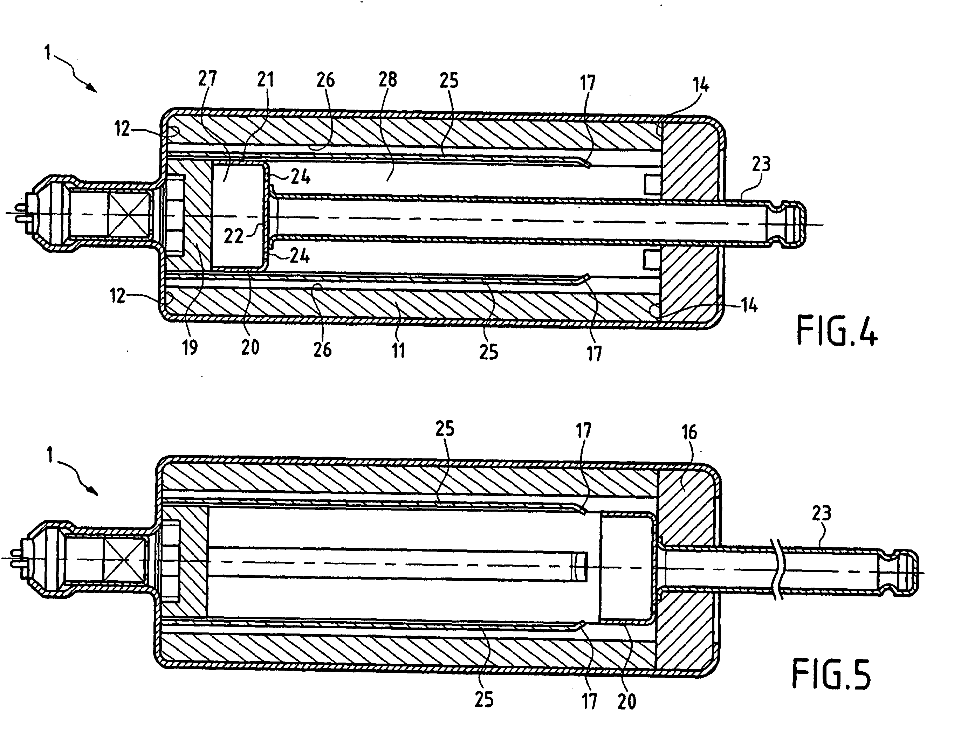

En se référant aux figures 1 à 5, on observe qu'un système de protection selon la première variante préférée de réalisation de l'invention comprend un générateur 1 de gaz constitué à partir d'un corps 2 creux cylindrique monobloc comportant une paroi latérale 3 se terminant, d'une part, par une extrémité amont réalisée sous la forme d'une face plane transversale 4 prolongée axialement par un col 5 creux présentant une extrémité ouverte, et d'autre part, par une extrémité aval 6 ouverte. Un chargement pyrotechnique 7 ainsi qu'un dispositif d'allumage constitué par un allumeur électro-pyrotechnique 8 sont insérés dans le col 5 creux par son extrémité ouverte puis cette dernière est sertie sur l'allumeur 8. Une pièce 9 cylindrique creuse monobloc en matière plastique constituant un chemisage et contenant un moyen de coulissement 10 est glissée dans le corps 2. Cette pièce 9 comporte une paroi latérale 11 dont la surface externe est au contact de la surface interne de la paroi latérale 3 du corps 2 et présente une première extrémité ouverte crénelée ainsi qu'une seconde extrémité ouverte crénelée. La première comporte quatre dents 12 uniformément réparties sur la circonférence de la paroi latérale 11. Ces dents 12 encadrent quatre ouvertures radiales 13 et sont placées en appui contre la face plane transversale 4 de l'extrémité amont. La seconde extrémité ouverte crénelée comporte également quatre dents 14 encadrant quatre ouvertures radiales 15 et une rondelle 16 présentant une perforation centrale est glissée dans le corps 2 de manière à venir en butée contre lesdites dents 14. L'extrémité aval 6 est ensuite rabattue par sertissage sur ladite rondelle 16. La pièce 9 comporte par ailleurs quatre rainures longitudinales 18 qui sont creusées dans la surface externe de la paroi latérale 11 et qui permettent chacune de relier l'une des ouvertures radiales 13 à l'une des ouvertures radiales 15. La surface interne de la paroi latérale 11 comporte quatre languettes longitudinales fragilisées 25 présentant chacune une extrémité 17 incurvée et ces languettes 25 sont chacune obtenues grâce à une perforation longitudinale 26 particulière réalisée à proximité de ladite surface interne de la paroi latérale 11. Dans un même plan transversal, ces quatre perforations longitudinales 26 sont décalées selon un angle de 45° par rapport aux quatre rainures longitudinales 18. La pièce 9 contient également une paroi frontale 19 qui est située en retrait de la première extrémité crénelée et qui sert de socle au moyen de coulissement 10. Ce dernier est constitué à partir, d'une part, d'un capuchon 20 cylindrique comportant une paroi latérale 21 se terminant par une extrémité ouverte en appui contre la paroi frontale 19 et par un fond plat 22 divisant ainsi l'intérieur de la pièce 9 en une chambre propulsive 27 et en une chambre de coulissement 28, et d'autre part, d'une tige 23 dont le diamètre est légèrement inférieur à celui de la perforation centrale et présentant une première extrémité fixée par soudure sur le fond plat 22 ainsi qu'une seconde extrémité traversant ladite perforation centrale. Plus précisément, la paroi latérale 21 est au contact de la surface interne de la paroi latérale 11 de la pièce 9 et le fond plat 22 est muni d'orifices 24 uniformément répartis autour de la zone de fixation entre le capuchon 20 et la tige 23. Une plaque de protection (non représentée) est enfin fixée sur l'extrémité de la tige 23 située à l'extérieur du corps 2.

Lors d'une collision nécessitant le déploiement de la plaque de protection afin de protéger efficacement les membres inférieurs de l'occupant d'un véhicule, le fonctionnement du système de protection est le suivant. Un ordre de déclenchement est transmis à l'allumeur 8 et ce dernier provoque l'initiation en combustion du chargement pyrotechnique 7. Celui-ci génère alors des gaz de combustion qui, tout d'abord, s'échappent par les ouvertures radiales 13 de la première extrémité ouverte crénelée, puis longent les rainures longitudinales 18 et enfin pénètrent dans la chambre de coulissement 28 après avoir traversé les ouvertures radiales 15 de la seconde extrémité ouverte crénelée. Une partie de ces gaz traverse alors les orifices 24 portés par le capuchon 20 et remplit la chambre propulsive 27 qui est initialement délimitée par la paroi frontale 19, la paroi latérale 21 et le fond plat 22 du capuchon 20. Ledit fond plat 22 présentant dans la chambre propulsive 27 une surface de contact supérieure à celle située dans la chambre de coulissement 28, les gaz contenus dans ladite chambre propulsive 27 créent une force motrice obligeant le moyen de coulissement 10 à glisser le long de la surface interne de la paroi latérale 11. Au fur et à mesure du déplacement dudit moyen de coulissement 10, les gaz confinés dans la chambre de coulissement 28 sont de plus en plus comprimés et constituent un frein permettant de ralentir très fortement la vitesse de déplacement dudit moyen de déplacement 10. Ce dernier termine sa course avec une faible vitesse et lorsque le fond plat 22 du capuchon 20 vient en butée contre la rondelle 16, l'extrémité 17 incurvée de chacune des languettes longitudinales fragilisées 25 permet de bloquer ledit moyen de coulissement 10 dans cette position. La plaque de protection est à ce moment là totalement déployée et lorsque les membres inférieurs de l'occupant viennent au contact de ladite plaque, l'énergie induite par l'impact est absorbée par les languettes longitudinales fragilisées 25 qui se déchirent longitudinalement.

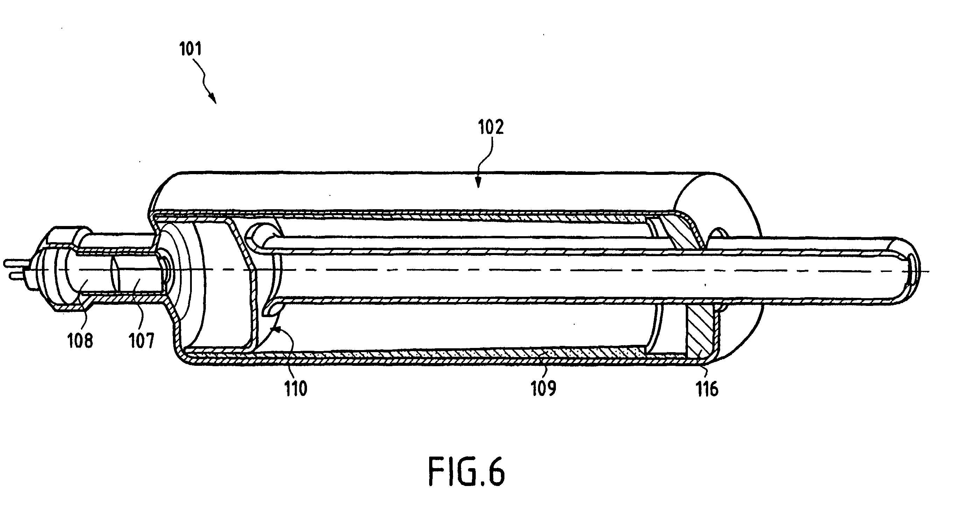

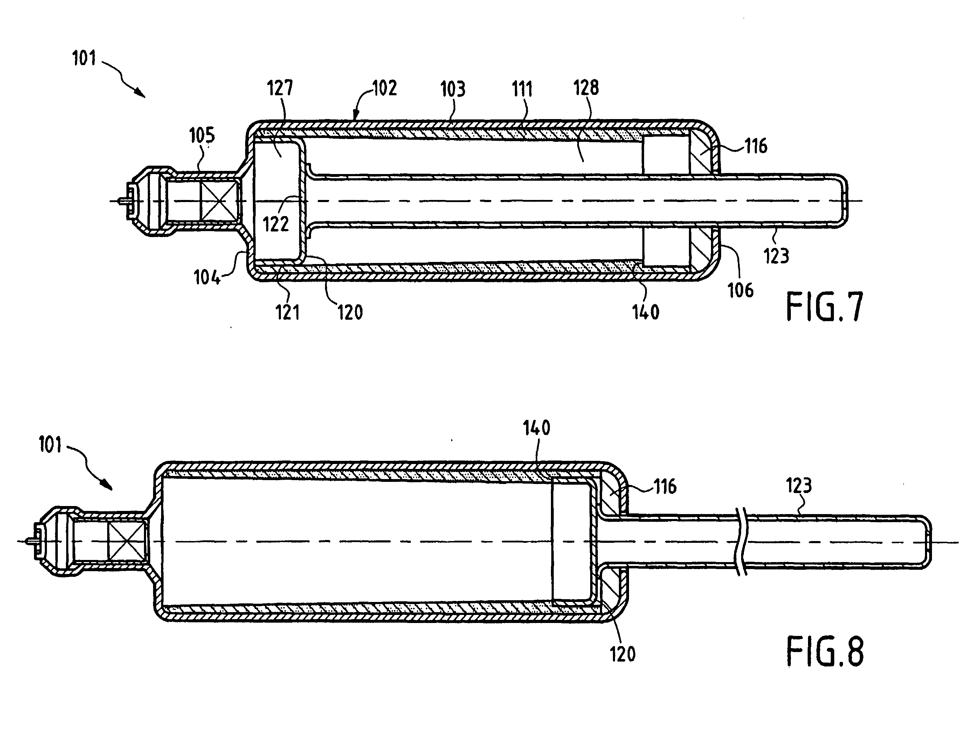

En se référant aux figures 6 à 8, on observe qu'un système de protection selon la seconde variante préférée de réalisation de l'invention comprend un générateur 101 de gaz constitué à partir d'un corps 102 creux cylindrique monobloc comportant une paroi latérale 103 se terminant, d'une part, par une extrémité amont réalisée sous la forme d'une face plane transversale 104 prolongée axialement par un col 105 creux présentant une extrémité ouverte, et d'autre part, par une extrémité aval 106 ouverte. Un chargement pyrotechnique 107 ainsi qu'un dispositif d'allumage constitué par un allumeur électro-pyrotechnique 108 sont insérés dans le col 105 creux par son extrémité ouverte puis cette dernière est sertie sur l'allumeur 108. Une pièce 109 cylindrique creuse monobloc en matière plastique constituant un chemisage et contenant un moyen de coulissement 110 est glissée dans le corps 102. Cette pièce 109 comporte une paroi latérale 111 dont la surface externe est au contact de la surface interne de la paroi latérale 103 du corps 102 et présente une première extrémité ouverte ainsi qu'une seconde extrémité ouverte. La première extrémité est placée en appui contre la face plane transversale 104 de l'extrémité amont et une rondelle 116 munie d'une perforation centrale est glissée dans le corps 102 de manière à venir en butée contre la seconde extrémité de la pièce 109, l'extrémité aval 106 étant ensuite rabattue par sertissage sur ladite rondelle 116. La surface interne de la paroi latérale 111 présente un épaulement externe 140 et l'épaisseur de ladite paroi latérale 111 est, d'une part, croissante entre sa première extrémité ouverte et l'épaulement externe 140, et d'autre part, constante entre ledit épaulement externe 140 et sa seconde extrémité ouverte.

Le moyen de coulissement 110 est constitué à partir, d'une part, d'un capuchon 120 cylindrique comportant une paroi latérale 121 se terminant par une extrémité ouverte en appui contre la face plane transversale 104 et par un fond plat 122 divisant ainsi l'intérieur de la pièce 109 en une chambre propulsive 127 et en une chambre de coulissement 128, et d'autre part, d'une tige 23 dont le diamètre est légèrement inférieur à celui de la perforation centrale et présentant une première extrémité fixée par une soudure sur le fond plat 122 ainsi qu'une seconde extrémité traversant ladite perforation centrale. La paroi latérale 121 est au contact de la surface interne de la paroi latérale 111 de la pièce 109 et une plaque de protection (non représentée) peut être enfin fixée sur l'extrémité de la tige 23 située à l'extérieur du corps 102.

Lors d'une collision nécessitant le déploiement de la plaque de protection afin de protéger efficacement les membres inférieurs de l'occupant du véhicule, le fonctionnement du système de protection est le suivant. Un ordre de déclenchement est transmis à l'allumeur 108 et ce dernier provoque l'initiation en combustion du chargement pyrotechnique 107. Celui-ci génère alors des gaz de combustion qui pénètrent directement dans la chambre propulsive 127 et qui obligent le moyen de coulissement 110 à se déplacer le long de la paroi latérale 111 de la pièce 109. L'épaisseur de ladite paroi latérale 111 étant croissante entre sa première extrémité ouverte et l'épaulement externe 140, les frottements entre la paroi latérale 121 du capuchon 120 et la paroi latérale 111 sont très fortement accentués et constituent un frein permettant de ralentir grandement la vitesse de déplacement du moyen de coulissement 110. Ce dernier termine sa course à faible vitesse et lorsque le fond plat 122 vient en butée contre la rondelle 116, l'épaulement externe 140 permet de bloquer ledit moyen de coulissement 110 dans cette position. La plaque de protection est à ce moment là totalement déployée et lorsque les membres inférieurs de l'occupant viennent au contact de ladite plaque, l'énergie induite par l'impact est absorbée par la pièce 109 au niveau de son épaulement externe 140 qui réagit en se déformant et en se fracturant.

## Revendications

1. Système de protection des membres inférieurs d'un occupant d'un véhicule automobile comprenant un générateur (1,101) de gaz apte à provoquer le déplacement d'un moyen de coulissement (10, 110) et donc le déploiement d'une plaque de protection, ledit moyen de coulissement présentant une première extrémité logée dans le générateur et une seconde extrémité située à l'extérieur dudit générateur et à laquelle est rattachée ladite plaque de protection, **caractérisé en ce que**,
i) le générateur de gaz contient un chargement pyrotechnique (7, 107) auquel est associé un dispositif d'allumage (8, 108),
ii) un dispositif de freinage est apte, au cours du déplacement du moyen de coulissement, à provoquer la diminution progressive de la vitesse de déplacement dudit moyen de coulissement,
iii) le générateur de gaz contient un moyen de blocage et d'amortissement destiné à bloquer le moyen de coulissement à la fin de son déplacement, la plaque étant à ce moment là totalement déployée, et à absorber l'énergie induite par l'impact des membres inférieurs de l'occupant sur la plaque de protection.

2. Système de protection selon la revendication 1, **caractérisé en ce que**,
i) le générateur (1, 101) de gaz est constitué à partir d'un corps (2,102) cylindrique présentant une extrémité amont dans laquelle sont insérés le chargement pyrotechnique (7, 107) ainsi que le dispositif d'allumage (8, 108), une paroi latérale (3, 103) et une extrémité aval (6, 106) portant une perforation centrale,
ii) ledit générateur contient une pièce (9, 109) cylindrique qui constitue un chemisage le long duquel peut glisser le moyen de coulissement (10, 110) sous l'action des gaz provenant de la combustion du chargement pyrotechnique.

3. Système de protection selon la revendication 2, **caractérisé en ce que**, la pièce (9, 109) comporte une paroi latérale (11, 111) au contact de la paroi latérale (3, 103) du corps (2, 102) présentant une première extrémité calée contre l'extrémité amont et une seconde extrémité calée contre l'extrémité aval (6, 106).

4. Système de protection selon la revendication 3, **caractérisé en ce que** le moyen de coulissement (10, 110) est constitué par
i) un capuchon (20, 120) cylindrique comportant une paroi latérale (21, 121) se terminant par une extrémité ouverte et par un fond plat (22, 122), ladite paroi latérale (21, 121) étant au contact de la surface interne de la paroi latérale de la pièce (9, 109) et ledit fond plat permettant de diviser l'intérieur de la pièce en une chambre propulsive (27, 127) et en une chambre de coulissement (28, 128),
ii) une tige (23, 123) présentant une première extrémité fixée sur le fond plat et une seconde extrémité traversant la perforation centrale portée par l'extrémité aval (6, 106) du corps (2, 102).

5. Système de protection selon la revendication 1, **caractérisé en ce que** le dispositif de freinage est pneumatique.

6. Système de protection selon la revendication 4, **caractérisé en ce que**,
i) la pièce (9) est monobloc et présente une paroi frontale (19) étanche intercalée entre la première extrémité de la pièce (9) et l'extrémité ouverte du capuchon (20),
ii) le fond plat (22) est muni d'orifices (24) répartis autour de la zone de fixation entre ledit capuchon et la tige (23),
iii) la pièce (9) comporte des zones ajourées destinées à conduire directement les gaz provenant de la combustion du chargement pyrotechnique (7) dans la chambre de coulissement (28).

7. Système de protection selon la revendication 6, **caractérisé en ce que** la première extrémité ainsi que la seconde extrémité de la pièce (9) sont crénelées et **en ce que** des rainures longitudinales (18) sont creusées dans la surface externe de la paroi latérale (11) de la pièce.

8. Système de protection selon l'une quelconque des revendications 6 ou 7, **caractérisé en ce que** des perforations longitudinales (26) réalisées dans la pièce (9) à proximité de la surface interne de la paroi latérale (11) délimitent des languettes longitudinales fragilisées (25) constituant le moyen de blocage et d'amortissement.

9. Système de protection selon la revendication 1, **caractérisé en ce que** le dispositif de freinage est mécanique.

10. Système de protection selon la revendication 4, **caractérisé en ce que** la surface interne de la paroi latérale (111) de la pièce (109) présente un épaulement externe (140) destiné à bloquer le moyen de coulissement (110) à la fin de son déplacement, l'épaisseur de la paroi latérale (111) étant croissante entre la première extrémité de ladite paroi latérale et l'épaulement externe (140).

11. Système de protection selon l'une quelconque des revendications 2 à 10, **caractérisé en ce que** la pièce (9, 109) est en matière plastique.

12. Système de protection selon l'une quelconque des revendications 1 à 11, **caractérisé en ce que** le chargement pyrotechnique (7, 107) génère une quantité de gaz de combustion décroissante par unité de temps.

13. Générateur (1,101) de gaz utilisé en sécurité automobile et apte à provoquer le déplacement d'un moyen de coulissement (10,110) qui présente une première extrémité logée dans le générateur et une seconde extrémité située à l'extérieur dudit générateur, **caractérisé en ce que**,
i) le générateur de gaz contient un chargement pyrotechnique (7,107) auquel est associé un dispositif d'allumage (8,108),
ii) un dispositif de freinage est apte, au cours du déplacement du moyen de coulissement, à provoquer la diminution progressive de la vitesse de déplacement dudit moyen de coulissement,
iii) le générateur de gaz contient un moyen de blocage et d'amortissement destiné à bloquer le moyen de coulissement à la fin de sons déplacement puis à absorber l'énergie induite par le déplacement du moyen de coulissement dans le sens opposé.

## Patentansprüche

1. System zum Schutz der unteren Gliedmassen eines Kraftfahrzeuginsassen, das einen Gasgenerator (1, 101) aufweist, der die Verschiebung einer Gleiteinrichtung (10, 110) und somit das Ausfahren einer Schutzplatte bewirken kann, wobei die Gleiteinrichtung ein erstes Ende, das im Generator angeordnet ist, und ein zweites Ende aufweist, das sich außerhalb des Generators befindet und an dem die Schutzplatte befestigt ist, **dadurch gekennzeichnet, dass**
i) der Gasgenerator eine pyrotechnische Ladung (7, 107) enthält, der eine Zündvorrichtung (8, 108) zugeordnet ist,
ii) eine Bremsvorrichtung in der Lage ist, während der Verschiebung der Gleiteinrichtung die progressive Verringerung der Bewegungsgeschwindigkeit der Gleiteinrichtung zu bewirken,
iii) der Gasgenerator ein Blockier- und Dämpfungsmittel aufweist, das dazu bestimmt ist, die Gleiteinrichtung am Ende ihrer Verschiebung zu blockieren, wobei die Platte zu diesem Zeitpunkt vollständig ausgefahren ist, und die Energie zu absorbieren, die durch den Aufprall der unteren Gliedmassen des Insassen auf die Schutzplatte erzeugt wird.

2. Schutzsystem nach Anspruch 1, **dadurch gekennzeichnet, dass**
i) der Gasgenerator (1, 101) ausgehend von einem zylindrischen Körper (2, 102) hergestellt wird, der ein vorderes Ende, in das die pyrotechnische Ladung (7, 107) sowie die Zündvorrichtung (8, 108) eingefügt sind, eine Seitenwand (3, 103) und ein ein zentrales Loch aufweisendes, hinteres Ende (6, 106) aufweist,
ii) wobei der zylindrische Generator ein zylindrisches Teil (9, 109) aufweist, das eine Umhüllung bildet, entlang der die Gleiteinrichtung (10, 110) unter der Wirkung der Gase gleiten kann, die von der Verbrennung der pyrotechnischen Ladung stammen.

3. Schutzsystem nach Anspruch 2, **dadurch gekennzeichnet, dass** das Teil (9, 109) eine Seitenwand (11, 111) aufweist, die mit der Seitenwand (3, 103) des Körpers (2, 102) in Kontakt steht und ein erstes Ende, das gegen das vordere Ende verkeilt ist, und ein zweites Ende aufweist, das gegen das hintere Ende (6, 106) verkeilt ist.

4. Schutzsystem nach Anspruch 3, **dadurch gekennzeichnet, dass** die Gleiteinrichtung (10, 110) besteht aus
i) einer zylindrischen Haube (20, 120), die eine Seitenwand [21, 121) aufweist, die in einem offenen Ende und einem flachen Boden (22, 122) endet, wobei die Seitenwand (21, 121) mit der Innenfläche der Seitenwand des Teils (9, 109) in Kontakt steht, und der flache Boden es ermöglicht, das Innere des Teils in eine Antriebskammer (27, 127) und eine Gleitkammer (28, 128) aufzuteilen,
il) einer Stange (23, 123), die ein erstes Ende, das am flachen Boden befestigt ist, und ein zweites Ende aufweist, das das zentrale Loch des hinteren Endes (6, 106) des Körpers (2, 102) durchquert.

5. Schutzsystem nach Anspruch 1, **dadurch gekennzeichnet, dass** die Bremsvorrichtung pneumatisch ist.

6. Schutzsystem nach Anspruch 4, **dadurch gekennzeichnet, dass**
i) das Teil (9) aus einem Stück besteht und eine dichte Stirnwand (19) aufweist, die zwischen das erste Ende des Teils (9) und das offene Ende der Haube (20) eingeschoben ist,
ii) der flache Boden (22) mit Öffnungen (24) versehen ist, die um die Befestigungszone zwischen der Haube und der Stange (23) herum verteilt sind,
iii) das Teil (9) gelochte Zonen aufweist, die dazu bestimmt sind, die von der Verbrennung der pyrotechnischen Ladung (7) stammenden Gase direkt in die Gleitkammer (28) zu leiten.

7. Schutzsystem nach Anspruch 6, **dadurch gekennzeichnet, dass** das erste Ende sowie das zweite Ende des Teils (9) gezackt sind, und dass Längsnuten (18) in der Außenfläche der Seitenwand (11) des Teils ausgehöhlt sind.

8. Schutzsystem nach einem der Ansprüche 6 oder 7, **dadurch gekennzeichnet, dass** Längslöcher (26), die in dem Teil (9) in der Nähe der Innenfläche der Seitenwand (11) hergestellt sind, zerbrechliche Längszungen (25) begrenzen, die das Blockier- und Dämpfungsmittel bilden.

9. Schutzsystem nach Anspruch 1, **dadurch gekennzeichnet, dass** die Bremsvorrichtung mechanisch ist.

10. Schutzsystem nach Anspruch 4, **dadurch gekennzeichnet, dass** die Innenfläche der Seitenwand (111) des Teils (109) eine Außenschulter (140) aufweist, die dazu bestimmt ist, die Gleiteinrichtung (110) am Ende ihrer Verschiebung zu blockieren, wobei die Dicke der Seitenwand (111) zwischen dem ersten Ende der Seitenwand und der Außenschulter (140) ansteigt.

11. Schutzsystem nach einem der Ansprüche 2 bis 10, **dadurch gekennzeichnet, dass** das Teil (9, 109) aus Kunststoffmaterial ist.

12. Schutzsystem nach einem der Ansprüche 1 bis 11, **dadurch gekennzeichnet, dass** die pyrotechnische Ladung (7, 107) eine pro Zeiteinheit abnehmende Verbrennungsgasmenge erzeugt.

13. Gasgenerator (1, 101), der in der Kraftfahrzeugsicherheit verwendet wird und in der Lage ist, die Verschiebung einer Gleiteinrichtung (10, 110) zu bewirken, die ein erstes im Generator angeordnetes Ende und ein zweites außerhalb des Generators angeordnetes Ende aufweist, **dadurch gekennzeichnet, dass**
i) der Gasgenerator eine pyrotechnische Ladung (7, 107) enthält, der eine Zündvorrichtung (8, 108) zugeordnet ist,
ii) eine Bremsvorrichtung in der Lage ist, während der Verschiebung der Gleiteinrichtung die progressive Verringerung der Bewegungsgeschwindigkeit der Gleiteinrichtung zu bewirken,
iii) der Gasgenerator ein Blockier- und Dämpfungsmittel aufweist, das dazu bestimmt ist, die Gleiteinrichtung am Ende ihrer Verschiebung zu blockieren und dann die durch die Verschiebung der Gleiteinrichtung in Gegenrichtung erzeugte Energie zu absorbieren.

## Claims

1. System for protecting the lower limbs of an occupant of a motor vehicle, said protective system comprising a gas-generator (1, 101) capable of giving rise to the displacement of a sliding means (10, 110) and therefore the deployment of a protective plate, the said sliding means having a first end which is accommodated in the generator and a second end which is situated outside the said generator and to which the said protective plate is linked, **characterised in that**
i) the gas-generator contains a pyrotechnic charge (7, 107) with which a firing device (8, 108) is associated,
ii) a braking device is capable of giving rise, during the displacement of the sliding means, to a progressive diminution in the speed of displacement of the said sliding means,
iii) the gas-generator contains an obstructing and damping means intended to obstruct the sliding means at the end of its displacement, the plate being totally deployed at that moment, and to absorb the energy induced by the impact of the lower limbs of the occupant on the protective plate.

2. Protective system according to claim 1, **characterised in that**
i) the gas-generator (1, 101) is put together from a cylindrical body (2, 102) having an upstream end in which the pyrotechnic charge (7, 107) and also the firing device (8, 108) are inserted, a side wall (3, 103) and a downstream end (6, 106) carrying a central perforation,
ii) the said generator contains a cylindrical piece (9, 109) which constitutes a casing along which the sliding means (10, 110) is able to slide under the action of the gases originating from the combustion of the pyrotechnic charge.

3. Protective system according to claim 2, **characterised in that** the piece (9, 109) has a side wall (11, 111) which is in contact with the side wall (3, 103) of the body (2, 102) and has a first end which is wedged against the upstream end and a second end which is wedged against the downstream end (6, 106).

4. Protective system according to claim 3, **characterised in that** the sliding means (10, 110) is constituted by
i) a cylindrical cap (20, 120) having a side wall (21, 121) which terminates in an open end and in a flat bottom (22, 122), the said side wall (21, 121) being in contact with the inner surface of the side wall of the piece (9, 109) and the said flat bottom making it possible to divide the interior of the piece into a propulsive chamber (27, 127) and a sliding chamber (28, 128),
ii) a rod (23, 123) having a first end which is fixed onto the flat bottom and a second end which passes through the central perforation carried by the downstream end (6, 106) of the body (2, 102).

5. Protective system according to claim 1, **characterised in that** the braking device is pneumatic.

6. Protective system according to claim 4, **characterised in that**
i) the piece (9) is made in one piece and has an impervious front wall (19) intercalated between the first end of the piece (9) and the open end of the cap (20),
ii) the flat bottom (22) is provided with orifices (24) which are distributed round the fixing zone between the said cap and the rod (23),
iii) the piece (9) has perforated zones intended to conduct the gases originating from the combustion of the pyrotechnic charge (7) directly into the sliding chamber (28).

7. Protective system according to claim 6, **characterised in that** the first end and also the second end of the piece (9) are crenellated, and **in that** longitudinal grooves (18) are hollowed out of the outer surface of the side wall (11) of said piece.

8. Protective system according to any one of claims 6 or 7, **characterised in that** longitudinal perforations (26) produced in the piece (9) close to the inner surface of the side wall (11) delimit embrittled longitudinal tongues (25) constituting the obstructing and damping means.

9. Protective system according to claim 1, **characterised in that** the braking device is mechanical.

10. Protective system according to claim 4, **characterised in that** the inner surface of the side wall (111) of the piece (109) has an outer shoulder (140) which is intended to obstruct the sliding means (110) at the end of its displacement, the thickness of the side wall (111) increasing between the first end of the said side wall and the outer shoulder (140).

11. Protective system according to any one of claims 2 to 10, **characterised in that** the piece (9, 109) is made of plastic material.

12. Protective system according to any one of claims 1 to 11, **characterised in that** the pyrotechnic charge (7, 107) generates a quantity of combustion gas which decreases per unit of time.

13. Gas-generator (1, 101) used in motor-vehicle safety and capable of giving rise to the displacement of a sliding means (10, 110) which has a first end which is accommodated in the generator and a second end which is situated outside the said generator, **characterised in that**
i) the gas-generator contains a pyrotechnic charge (7, 107) with which a firing device (8, 108) is associated,
ii) a braking device is capable of giving rise, during the displacement of the sliding means, to a progressive diminution in the speed of displacement of the said sliding means,
iii) the gas-generator contains an obstructing and damping means intended to obstruct the sliding means at the end of its displacement and then to absorb the energy induced by the displacement of the sliding means in the opposite direction.
